# EUROPEAN PATENT APPLICATION

(11) **EP 3 738 815 A1**
(43) Date of publication of application: **18.11.2020**
(21) Application number: 19781348.8
(22) Date of filing: 11.03.2019
(51) Int. Cl.: B60K 17/02, B60K 17/04, F16H 57/023

(54) **DUAL-POWER SOURCE DUAL-DRIVE ASSEMBLY FOR VEHICLE**

(30) Priority: 04.04.2018 CN 201820475854 U
(71) Applicant: Jing-Jin Electric Technologies Co., Ltd, Beijing 100016 (CN)
(72) Inventor: YU, Ping, Beijing 100016 (CN); SHAO, Kuizhu, Beijing 100016 (CN); LI, Jianwen, Beijing 100016 (CN); WANG, Haibin, Beijing 100016 (CN); LI, Jiaqi, Beijing 100016 (CN)
(74) Representative: Röggla, Harald
(86) International application number: PCT/CN2019/077672
(87) International publication number: WO 2019/192291

(57) **Abstract**

A dual-power-source dual driving assembly for a vehicle, includes two driving units that are symmetrically provided, the two driving units are connected to a same one set of vehicle axle half shaft, each of the two driving units is provided with a power source (1) and an automatic transmission (2), each of the automatic transmissions (2) is connected to one half shaft of the vehicle axle half shaft, each of the automatic transmissions (2) is provided with an input shaft (3), an intermediate shaft (8) and an output shaft (12) that are parallel, the three shafts are provided with multiple stages of gears that have different transmission ratios, the power source (1) is connected to the input shaft (3), and the output shaft (12) is connected to a left half shaft or right half shaft of the vehicle axle half shaft. The dual driving assembly can realize transmission of two speed ratios, which results in flexible transmission modes, and shortens the axial dimension of the driving assembly. The present disclosure can satisfy the acceleration performance and the gradeability of the vehicle, and can also satisfy the demand on high vehicle speeds.

## Description

### TECHNICAL FIELD

The present disclosure relates to the technical field of new-energy vehicles, and particularly relates to a dual-power-source dual driving assembly for a vehicle.

### BACKGROUND

Currently, the power characteristics of the electric motors employed by purely electric or hybrid-power new-energy vehicles have gaps with the requirements of the entire vehicles, and cannot satisfy the requirements on the speed ratios and the moments. Because new-energy vehicles are required to handle increasingly more complicated working conditions and road conditions, and the users have raised increasingly higher requirements on the comfort degree and the endurance mileage of new-energy vehicles, new-energy vehicles that employ the power mode of purely direct driving by an electric motor, the power mode of an electric motor connected to a speed reducer, or the power mode of oil-electricity hybrid have become incapable of satisfying the requirements of the development of the industry of new-energy vehicles.

Some special cars have a high requirement on the vehicle speed, such as sports cars and racing cars. Those special cars can obtain a higher speed on even road surfaces, but the speed is difficult to be increased on complicated road surfaces. Conventional purely electric or hybrid-power driving systems cannot satisfy the demands of vehicles on acceleration performance, gradeability and maximum vehicle speed.

### SUMMARY

Aiming at the above problems in the prior art, an object of the present disclosure is to provide a dual-power-source dual driving assembly for a vehicle, to solve the problem that conventional power assemblies employ transmission of a single speed ratio, which cannot satisfy the demands of vehicles on acceleration performance, gradeability and maximum vehicle speed, and cannot adapt for complicated road conditions and working conditions.

To achieve the above objects, the present disclosure employs the following technical solutions:
A dual-power-source dual driving assembly for a vehicle comprises two driving units that are symmetrically provided, the two driving units are connected to a same one set of vehicle axle half shaft, each of the two driving units is provided with a power source and an automatic transmission, each of the automatic transmissions is connected to one half shaft of the vehicle axle half shaft, and each of the automatic transmissions has transmission of two speed ratios that are capable of mutually switching.

Preferably, each automatic transmission of the automatic transmissions is provided with an input shaft, an intermediate shaft and an output shaft that are parallel, the input shaft is connected to the power source, the output shaft is connected to a left half shaft or right half shaft of the vehicle axle half shaft, the input shaft is connected to the intermediate shaft via a first gear train, a second gear train and a third gear train that are capable of mutually switching and have different transmission ratios are provided between the intermediate shaft and the output shaft, and the intermediate shaft and/or the output shaft are/is provided with a clutch for the switching between the second gear train and the third gear train.

Preferably, the first gear train comprises a first gear provided on the input shaft and a second gear provided on the intermediate shaft, and the first gear and the second gear are engaged; or an idle gear is provided between the first gear and the second gear.

Preferably, the second gear train comprises a third gear provided on the intermediate shaft and a fourth gear that is provided on the output shaft and is engaged with the third gear, and the third gear is idle-nested to the intermediate shaft, and is connected to the clutch, or the fourth gear is idle-nested to the output shaft, and is connected to the clutch.

Preferably, the third gear train comprises a fifth gear provided on the output shaft and a sixth gear that is provided on the intermediate shaft and is engaged with the fifth gear, and the fifth gear is idle-nested to the output shaft, and is connected to the clutch, or the sixth gear is idle-nested to the intermediate shaft, and is connected to the clutch.

Preferably, the clutch comprises a first-gear clutch and a second-gear clutch, the first-gear clutch is provided on the output shaft or the intermediate shaft, and is configured to be connected to the third gear train, and the second-gear clutch is provided on the intermediate shaft or the output shaft, and is configured to be connected to the second gear train.

Preferably, the clutch comprises a first-gear clutch and a second-gear clutch that are coaxially provided on the intermediate shaft or the output shaft, the first-gear clutch is configured to be connected to the third gear train, and the second-gear clutch is configured to be connected to the second gear train.

Preferably, the clutch is a bidirectional clutch that is nested to the intermediate shaft or the output shaft, and the bidirectional clutch slides in an axial direction to be connected to the third gear train or the second gear train.

Preferably, a transmission ratio of the first gear train is i 1, a transmission ratio of the second gear train is i3, and a transmission ratio of the third gear train is i2.

Preferably, a rotor shaft of the power source and the input shaft are of an integral structure.

The advantages and advantageous effects of the present disclosure are as follows. The dual-power-source dual driving assembly for a vehicle of the present disclosure comprises two driving units that are symmetrically provided, the two driving units are connected to the same one set of vehicle axle half shaft, and each of the two driving units is provided with a power source and an automatic transmission, which can provide a high driving force for the vehicle, to significantly increase the vehicle speed, to facilitate the usage in special cars such as sports cars and racing cars.

The dual-power-source dual driving assembly for a vehicle according to the present disclosure is connected to the rear axle half shaft or the front axle half shaft of the vehicle, and the vehicle power assembly can realize transmission of two speed ratios, which results in flexible transmission modes, and satisfies the demands of the entire vehicle on travelling on different road conditions. When the vehicle is required to quickly accelerate or is climbing under a load, the transmission of the larger speed ratio may be selected, to increase the driving force of the entire vehicle, to overcome the defect of the insufficient driving force of the entire vehicle. When the entire vehicle is in the cruising state, the transmission of the smaller speed ratio may be selected, to satisfy the requirement on the high-speed travelling of the entire vehicle, save energy, and increase the endurance mileage of the vehicle.

In the dual-power-source dual driving assembly for a vehicle according to the present disclosure, in one aspect the axial dimension of the driving assembly is shortened, which facilitates the placement in the entire vehicle, and in another aspect it uses a smaller quantity of the gears, which simplifies the transmission structure. The present disclosure, by using the integral structure of the electric motor and the transmission, solves the problems of conventional power assemblies that the axial dimensions are larger, which results in the difficulty in the placement in vehicles, and that the transmissions have a larger quantity of gears, which results in complicated transmission structures.

### BRIEF DESCRIPTION OF THE DRAWINGS

Fig. 1 is a schematic structural diagram according to the first embodiment of the present disclosure;
Fig. 2 is a schematic structural diagram according to the first embodiment of the present disclosure added an idle gear;
Fig. 3 is a schematic structural diagram according to the second embodiment of the present disclosure;
Fig. 4 is a schematic structural diagram according to the third embodiment of the present disclosure;
Fig. 5 is a schematic structural diagram according to the fourth embodiment of the present disclosure;
Fig. 6 is a schematic structural diagram according to the fifth embodiment of the present disclosure; and
Fig. 7 is a schematic structural diagram according to the sixth embodiment of the present disclosure.

In the drawings: 1. power sources; 2. automatic transmissions; 3. input shaft; 4. first gear; 5. idle gear; 6. second gear; 7. sixth gear; 8. intermediate shaft; 9. second-gear clutch; 10. third gear; 11. fourth gear; 12. output shaft; 13. first-gear clutch; 14. fifth gear; 15. idler shaft; and 16. bidirectional clutch.

### DETAILED DESCRIPTION

Conventional new-energy vehicles employ the power mode of purely direct driving by an electric motor, the power mode of an electric motor connected to a speed reducer, or the power mode of oil-electricity hybrid. Some special cars have a high requirement on the vehicle speed, such as sports cars and racing cars. Those special cars can obtain a higher speed on even road surfaces, but the speed is difficult to be increased on complicated road surfaces. Conventional purely electric or hybrid-power driving systems cannot satisfy the demands of vehicles on acceleration performance, gradeability and maximum vehicle speed.

In order to solve the problem that conventional power assemblies employ transmission of a single speed ratio, which cannot satisfy the demands of vehicles on acceleration performance, gradeability and maximum vehicle speed, and cannot adapt for complicated road conditions and working conditions, the present disclosure employs two driving units that are symmetrically provided, the two driving units are connected to the same one set of vehicle axle half shaft, and each of the two driving units is provided with a power source and an automatic transmission, which can provide a higher driving force for the vehicle, to significantly increase the vehicle speed, and the vehicle power assembly can realize transmission of two speed ratios, which results in flexible transmission modes, and satisfies the demands of the entire vehicle on travelling on different road conditions.

In order to make the objects, the technical solutions and the advantages of the present disclosure clearer, the embodiments of the present disclosure will be described below in further detail in conjunction with the drawings.

The first embodiment

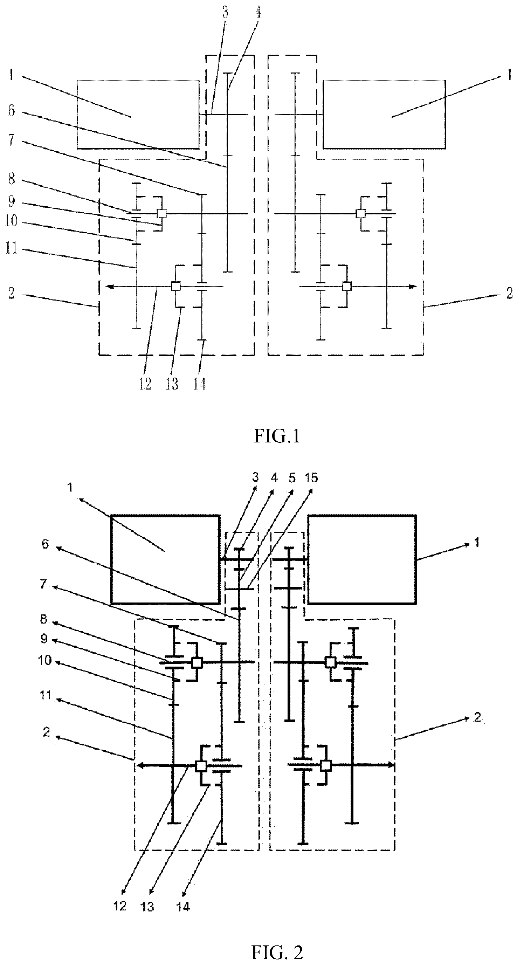

As shown in Fig. 1, a double-power-source dual driving assembly for a vehicle according to the present disclosure comprises two driving units that are symmetrically provided, the two driving units are connected to the same one set of vehicle axle half shaft, each of the two driving units is provided with a power source 1 and an automatic transmission 2, each of the automatic transmissions 2 is connected to one half shaft of the vehicle axle half shaft, and each of the automatic transmissions 2 has transmission of two speed ratios that are capable of mutually switching.

The detailed structure is described below in detail by taking the driving unit on the left as the example.

As shown in Fig. 1, each of the automatic transmissions 2 is provided with an input shaft 3, an intermediate shaft 8 and an output shaft 12 that are parallel, the input shaft 3 is connected to the power source 1, and the output shaft 12 is connected to a left half shaft or right half shaft of the vehicle axle half shaft, wherein the automatic transmission 2 on the left is connected to the left half shaft of the vehicle axle half shaft, and the automatic transmission 2 on the right is connected to the right half shaft of the vehicle axle half shaft. The input shaft 3 is connected to the intermediate shaft 8 via a first gear train, a second gear train and a third gear train that are capable of mutually switching and have different transmission ratios are provided between the intermediate shaft 8 and the output shaft 12, and the intermediate shaft 8 and the output shaft 12 are provided with a clutch for the switching between the second gear train and the third gear train.

The first gear train comprises a first gear 4 provided on the input shaft 3 and a second gear 6 provided on the intermediate shaft 8, and the first gear 4 and the second gear 6 are engaged. Alternatively, an idle gear 5 is provided between the first gear 4 and the second gear 6, as shown in Fig. 2. An idler shaft 15 is parallel to the input shaft 3, and the first gear 4, the idle gear 5 and the second gear 6 are engaged to form a triple gear. The idle gear 5 is mounted for the need of structure and dimension, and does not change the magnitude of the transmission ratio between the first gear 4 and the second gear 6. The first gear 4, the idle gear 5 and the second gear 6 form the triple gear, with a transmission ratio of i1.

The second gear train comprises a third gear 10 provided on the intermediate shaft 8 and a fourth gear 11 that is provided on the output shaft 12 and is engaged with the third gear 10, the third gear 10 is idle-nested to the intermediate shaft 8, and the fourth gear 11 is connected to the output shaft 12 by a key.

The third gear train comprises a fifth gear 14 provided on the output shaft 12 and a sixth gear 7 that is provided on the intermediate shaft 8 and is engaged with the fifth gear 14, the fifth gear 14 is idle-nested to the output shaft 12, and the sixth gear 7 is connected to the intermediate shaft 8 by a key. In the present embodiment, the third gear 10 and the fifth gear 14 are respectively mounted on the intermediate shaft 8 and the output shaft 12 via a needle bearing.

The clutch comprises a first-gear clutch 13 and a second-gear clutch 9, the first-gear clutch 13 is provided on the output shaft 12, and is used to be connected to the fifth gear 14 idle-nested to the output shaft, and the second-gear clutch 9 is provided on the intermediate shaft 8, and is used to be connected to the third gear 10 idle-nested to the intermediate shaft 8.

The engagement transmission ratio between the first gear 4 and the second gear 6 in the first gear train is i1, the engagement transmission ratio between the third gear 10 and the fourth gear 11 in the second gear train is i3, and the engagement transmission ratio between the fifth gear 14 and the sixth gear 7 in the third gear train is i2. The engagement transmission ratio in the automatic transmission 2 is i1×i2 or i1×i3.

When the first-gear clutch 13 is engaged and the second-gear clutch 9 is disengaged, the power source 1 transmits the power to the vehicle axle half shaft via sequentially the input shaft 3, the first gear 4, the second gear 6, the intermediate shaft 8, the sixth gear 7, the fifth gear 14, the first-gear clutch 13 and the output shaft 12, and the engagement transmission ratio in the automatic transmission 2 is i1×i2, which is the first working condition.

When the second-gear clutch 9 is engaged and the first-gear clutch 13 is disengaged, the power source 1 transmits the power to the vehicle axle half shaft via sequentially the input shaft 3, the first gear 4, the second gear 6, the intermediate shaft 8, the second-gear clutch 9, the third gear 10, the fourth gear 11 and the output shaft 12, and the engagement transmission ratio in the automatic transmission 2 is i1×i3, which is the second working condition.

When both of the first-gear clutch 13 and the second-gear clutch 9 are disengaged, neutral position is implemented, and at this point no power is outputted to the vehicle axle half shaft.

The magnitudes of the transmission ratios i1, i2 and i3 may be changed by changing the sizes or the tooth numbers of the gears, thereby changing the transmission ratio of the automatic transmission.

The driving unit on the right is of a mirror image relation with the driving unit on the left, and will not be described in detail here.

Preferably, the sequence of gear shifting of the driving unit on the right is the same as that of the driving unit on the left, whereby the rotational speeds of the wheels on the inner side and the outer side of the vehicle are the same. Generally, when a vehicle is turning, the rotational speeds of the wheels on the inner side and the outer side are required to be different, and at this point the rotational speeds may be adjusted by changing the rotational speed of the power source 1.

The rotor shaft of the power source 1 and the input shaft 3 are of an integral structure, which can reduce the impact on the automatic transmission 2 by the rotor shaft. The power source 1 is an electric motor, and may also be an engine. The connection structure between the output shaft 12 and the left half shaft or the right half shaft may be a spline connection, or be a shaft coupling, or be of an integral structure.

The first-gear clutch 13 and the second-gear clutch 9 are a contrate-tooth clutch, which comprises a movable fluted disc and a fixed fluted disc. The movable fluted disc of the first-gear clutch 13 is idle-nested to the output shaft 12, and the matching fixed fluted disc is fixed to the fifth gear 14. The movable fluted disc of the second-gear clutch 9 is idle-nested to the intermediate shaft 8, and the matching fixed fluted disc is fixed to the third gear 10. In the first-gear clutch 13 and the second-gear clutch 9, the movable fluted discs may slide on the shafts via splines. The center holes of the movable fluted discs are provided with internal splines, and correspondingly the output shaft 12 and the intermediate shaft 8 are provided with external splines. Furthermore, the lengths of the external splines should be greater than those of the internal splines of the movable fluted discs, so the movable fluted discs can be nested to the shafts, and can slide axially and output moments.

The movable fluted disc is provided with contrate transmission teeth or tooth spaces, and the fixed fluted disc is correspondingly provided with contrate tooth spaces or transmission teeth. The contrate-tooth clutch, as compared with friction clutches, can reduce the loss of kinetic energy to the largest extent, which overcomes the defect of conventional friction clutches of a too short life due to the incapacity of withstanding the dynamic shock from the electric motor.

The driving mode of the contrate-tooth clutch may be of an electromagnetic driving type by being driven by the attraction of an electromagnet, or of a hydraulic driving type by being driven by a hydraulic mechanism, or of a pneumatic driving type by being driven by a pneumatic mechanism, or of an electric driving type by being driven by an electric motor, or of a mechanic shifting fork driving type by being driven by a shifting fork, for driving the movable fluted disc to axially move to be engaged with the fixed fluted disc.

When the first-gear clutch 13 and the second-gear clutch 9 are electromagnetic jaw clutches, when power is inputted to the vehicle driving assembly, the electromagnetic jaw clutches can enable the power and the entire vehicle to be instantaneously disengaged and engaged at any time, which realizes the smooth switching of the power, and increases the traveling stability of the vehicle. Alternatively, both of the first-gear clutch 13 and the second-gear clutch 9 are a wet clutch, the wet clutch is provided with matching friction plate and steel strap therein, and the friction plate and the steel strap are contacted or separated by the driving of a hydraulic oil to perform the clutching. The installation of the wet clutches needs to realize the clutching between the intermediate shaft 8 and the third gear 10 idle-nested thereto, and the clutching between the output shaft 12 and the fifth gear 14 idle-nested thereto.

It can be known from the above that the vehicle driving assembly can realize transmission of two speed ratios, and the automatic transmission, according to a control strategy program, can realize the electrically controlled automatic gear shifting between the two gears, which results in flexible transmission modes, and satisfies the demands of the entire vehicle on travelling on different road conditions. When the vehicle is accelerating in starting up or is climbing under a load, the transmission of the larger speed ratio may be selected, to increase the driving force of the entire vehicle, to overcome the defect of the insufficient driving force of the entire vehicle. When the entire vehicle is in the cruising state, the transmission of the smaller speed ratio may be selected, to satisfy the requirement on the high-speed travelling of the entire vehicle, save energy, and increase the endurance mileage of the vehicle.

In the embodiments of the present disclosure, the vehicle axle half shaft may be the rear axle half shaft, and may also be the front axle half shaft. When the vehicle driving assembly is connected to the front axle half shaft, the vehicle is in a front driving mode, and when the vehicle driving assembly is connected to the rear axle half shaft, the vehicle is in a rear driving mode. The structure of the vehicle axle half shaft is not shown in Fig. 1, the vehicle axle half shaft comprises the left half shaft and the right half shaft, and no differential is required to be provided between the two half shafts.

The second embodiment

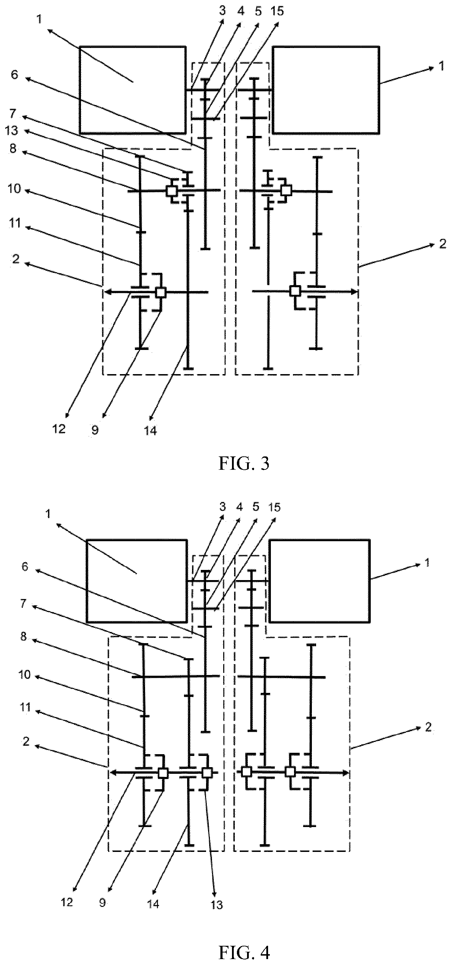

The present embodiment is an improvement made on the basis of the first embodiment. The present embodiment differs from the first embodiment in that: as shown in Fig. 3, in the driving unit on the left, the first-gear clutch 13 is idle-nested to the intermediate shaft 8, the matching fixed fluted disc is fixed to the sixth gear 7, the sixth gear 7 is idle-nested to the intermediate shaft 8, and the fifth gear 14 is fixed to the output shaft 12. The second-gear clutch 9 is idle-nested to the output shaft 12, the matching fixed fluted disc is fixed to the fourth gear 11, the fourth gear 11 is idle-nested to the output shaft 12, and the third gear 10 is fixed to the intermediate shaft 8.

The driving unit on the right is of a mirror image relation with the driving unit on the left, and will not be described in detail here.

It is set that the engagement transmission ratio between the first gear 4 and the second gear 6 is i1, or the engagement transmission ratio of the above-described triple gear is i1, the engagement transmission ratio between the fifth gear 14 and the sixth gear 7 is i2, and the engagement transmission ratio between the third gear 10 and the fourth gear 11 is i3.

When the first-gear clutch 13 is engaged and the second-gear clutch 9 is disengaged, the power source 1 transmits the power to the vehicle axle half shaft via sequentially the input shaft 3, the first gear 4, the idle gear 5, the second gear 6, the intermediate shaft 8, the first-gear clutch 13, the sixth gear 7, the fifth gear 14 and the output shaft 12, and the engagement transmission ratio in the automatic transmission 2 is i1×i2, which is the first working condition.

When the second-gear clutch 9 is engaged and the first-gear clutch 13 is disengaged, the power source 1 transmits the power to the vehicle axle half shaft via sequentially the input shaft 3, the first gear 4, the idle gear 5, the second gear 6, the intermediate shaft 8, the third gear 10, the fourth gear 11, the second-gear clutch 9 and the output shaft 12, and the engagement transmission ratio in the automatic transmission 2 is i1×i3, which is the second working condition.

When both of the first-gear clutch 13 and the second-gear clutch 9 are disengaged, neutral position is implemented, and at this point no power is outputted to the vehicle axle half shaft.

The sequence of gear shifting of the driving unit on the right is the same as that of the driving unit on the left. The other contents of the second embodiment are the same as those of the first embodiment, and will not be described repeatedly here.

The third embodiment

The present embodiment is an improvement made on the basis of the first embodiment. The present embodiment differs from the first embodiment in that: as shown in Fig. 4, the clutch comprises a first-gear clutch 13 and a second-gear clutch 9 that are coaxially provided on the output shaft 12, the first-gear clutch 13 is configured to be connected to the third gear train, and the second-gear clutch 9 is configured to be connected to the second gear train. In the driving unit on the left, the first-gear clutch 13 is idle-nested to the output shaft 12, the matching fixed fluted disc is fixed to the fifth gear 14, the fifth gear 14 is idle-nested to the output shaft 12, and the sixth gear 7 is fixed to the intermediate shaft 8. The second-gear clutch 9 is idle-nested to the output shaft 12, the matching fixed fluted disc is fixed to the fourth gear 11, the fourth gear 11 is idle-nested to the output shaft 12, and the third gear 10 is fixed to the intermediate shaft 8.

The driving unit on the right is of a mirror image relation with the driving unit on the left, and will not be described in detail here.

It is set that the engagement transmission ratio between the first gear 4 and the second gear 6 is i1, or the engagement transmission ratio of the above-described triple gear is i1, the engagement transmission ratio between the fifth gear 14 and the sixth gear 7 is i2, and the engagement transmission ratio between the third gear 10 and the fourth gear 11 is i3.

When the first-gear clutch 13 is engaged and the second-gear clutch 9 is disengaged, the power source 1 transmits the power to the vehicle axle half shaft via sequentially the input shaft 3, the first gear 4, the idle gear 5, the second gear 6, the intermediate shaft 8, the sixth gear 7, the fifth gear 14, the first-gear clutch 13 and the output shaft 12, and the engagement transmission ratio in the automatic transmission 2 is i1×i2, which is the first working condition.

When the second-gear clutch 9 is engaged and the first-gear clutch 13 is disengaged, the power source 1 transmits the power to the vehicle axle half shaft via sequentially the input shaft 3, the first gear 4, the idle gear 5, the second gear 6, the intermediate shaft 8, the third gear 10, the fourth gear 11, the second-gear clutch 9 and the output shaft 12, and the engagement transmission ratio in the automatic transmission 2 is i1×i3, which is the second working condition.

When both of the first-gear clutch 13 and the second-gear clutch 9 are disengaged, neutral position is implemented, and at this point no power is outputted to the vehicle axle half shaft.

The sequence of gear shifting of the driving unit on the right is the same as that of the driving unit on the left. The other contents of the third embodiment are the same as those of the first embodiment, and will not be described repeatedly here.

The fourth embodiment

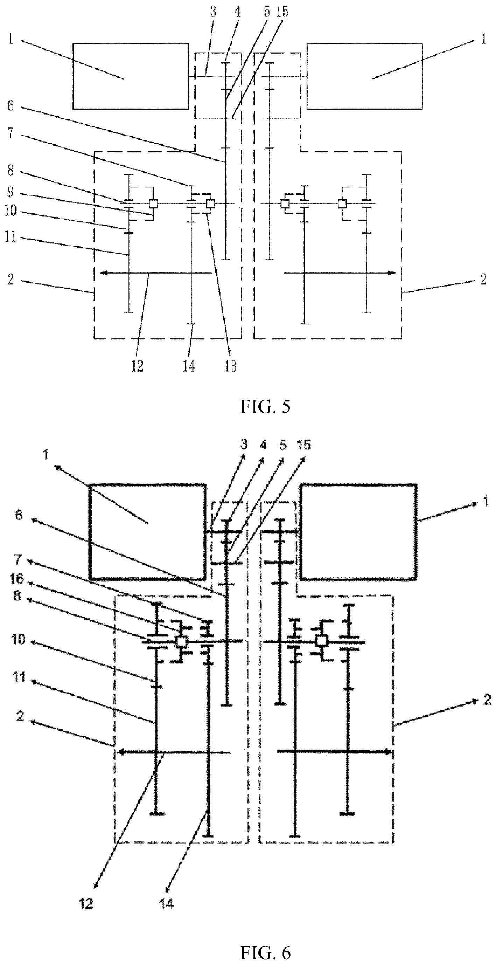

The present embodiment is an improvement made on the basis of the first embodiment. The present embodiment differs from the first embodiment in that: as shown in Fig. 5, the clutch comprises a first-gear clutch 13 and a second-gear clutch 9 that are coaxially provided on the intermediate shaft 8, the first-gear clutch 13 is configured to be connected to the third gear train, and the second-gear clutch 9 is configured to be connected to the second gear train. In the driving unit on the left, the first-gear clutch 13 is idle-nested to the intermediate shaft 8, the matching fixed fluted disc is fixed to the sixth gear 7, the sixth gear 7 is idle-nested to the intermediate shaft 8, and the fifth gear 14 is fixed to the output shaft 12.

The driving unit on the right is of a mirror image relation with the driving unit on the left, and will not be described in detail here.

It is set that the engagement transmission ratio between the first gear 4 and the second gear 6 is i1, or the engagement transmission ratio of the above-described triple gear is i1, the engagement transmission ratio between the fifth gear 14 and the sixth gear 7 is i2, and the engagement transmission ratio between the third gear 10 and the fourth gear 11 is i3.

When the first-gear clutch 13 is engaged and the second-gear clutch 9 is disengaged, the power source 1 transmits the power to the vehicle axle half shaft via sequentially the input shaft 3, the first gear 4, the idle gear 5, the second gear 6, the intermediate shaft 8, the first-gear clutch 13, the sixth gear 7, the fifth gear 14 and the output shaft 12, and the engagement transmission ratio in the automatic transmission 2 is i1×i2, which is the first working condition.

When the second-gear clutch 9 is engaged and the first-gear clutch 13 is disengaged, the power source 1 transmits the power to the vehicle axle half shaft via sequentially the input shaft 3, the first gear 4, the idle gear 5, the second gear 6, the intermediate shaft 8, the second-gear clutch 9, the third gear 10, the fourth gear 11 and the output shaft 12, and the engagement transmission ratio in the automatic transmission 2 is i1×i3, which is the second working condition.

When both of the first-gear clutch 13 and the second-gear clutch 9 are disengaged, neutral position is implemented, and at this point no power is outputted to the vehicle axle half shaft.

The sequence of gear shifting of the driving unit on the right is the same as that of the driving unit on the left. The other contents of the fourth embodiment are the same as those of the first embodiment, and will not be described repeatedly here.

The fifth embodiment

The present embodiment is an improvement made on the basis of the first embodiment. The present embodiment of the present disclosure differs from the first embodiment in that: as shown in Fig. 6, the clutch is a bidirectional clutch 16 that is nested to the intermediate shaft 8, and the bidirectional clutch 16 slides in the axial direction to be connected to the third gear train or the second gear train. In the driving unit on the left, a bidirectional clutch 16 is idle-nested to the intermediate shaft 8, both of the left and right sides of the bidirectional clutch 16 are provided with contrate teeth, and are equivalent to two movable fluted discs, both of the third gear 10 and the sixth gear 7 are idle-nested to the intermediate shaft 8, both of the two gears have the matching fixed fluted discs fixed thereto, and both of the fourth gear 11 and the fifth gear 14 are fixed to the output shaft 12.

The driving unit on the right is of a mirror image relation with the driving unit on the left, and will not be described in detail here.

It is set that the engagement transmission ratio between the first gear 4 and the second gear 6 is i1, or the engagement transmission ratio of the above-described triple gear is i1, the engagement transmission ratio between the fifth gear 14 and the sixth gear 7 is i2, and the engagement transmission ratio between the third gear 10 and the fourth gear 11 is i3.

When the bidirectional clutch 16 moves rightwardly, it can be engaged with the fixed fluted disc on the sixth gear 7, the power source 1 transmits the power to the vehicle axle half shaft via sequentially the input shaft 3, the first gear 4, the idle gear 5, the second gear 6, the intermediate shaft 8, the bidirectional clutch 16, the sixth gear 7, the fifth gear 14 and the output shaft 12, and the engagement transmission ratio in the automatic transmission 2 is i1×i2, which is the first working condition.

When the bidirectional clutch 16 moves leftwardly, it can be engaged with the fixed fluted disc on the third gear 10, the power source 1 transmits the power to the vehicle axle half shaft via sequentially the input shaft 3, the first gear 4, the idle gear 5, the second gear 6, the intermediate shaft 8, the bidirectional clutch 16, the third gear 10, the fourth gear 11 and the output shaft 12, and the engagement transmission ratio in the automatic transmission 2 is i1×i3, which is the second working condition.

When the bidirectional clutch 16 is in the center and is disengaged from both of the sixth gear 7 and the third gear 10, neutral position is implemented, and at this point no power is outputted to the vehicle axle half shaft.

The sequence of gear shifting of the driving unit on the right is the same as that of the driving unit on the left. The other contents of the fifth embodiment are the same as those of the first embodiment, and will not be described repeatedly here.

The sixth embodiment

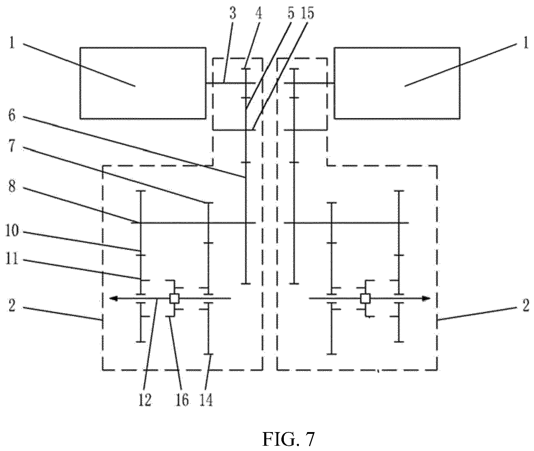

The present embodiment is an improvement made on the basis of the fifth embodiment. The present embodiment of the present disclosure differs from the fifth embodiment in that: as shown in Fig. 7, in the driving unit on the left, a bidirectional clutch 16 is idle-nested to the output shaft 12, both of the left and right sides of the bidirectional clutch 16 are provided with contrate teeth, and are equivalent to two movable fluted discs, both of the fourth gear 11 and the fifth gear 14 are idle-nested to the output shaft 12, both of the two gears have the matching fixed fluted discs fixed thereto, and both of the third gear 10 and the sixth gear 7 are fixed to the intermediate shaft 8.

The driving unit on the right is of a mirror image relation with the driving unit on the left, and will not be described in detail here.

It is set that the engagement transmission ratio between the first gear 4 and the second gear 6 is i1, or the engagement transmission ratio of the above-described triple gear is i1, the engagement transmission ratio between the fifth gear 14 and the sixth gear 7 is i2, and the engagement transmission ratio between the third gear 10 and the fourth gear 11 is i3.

When the bidirectional clutch 16 moves rightwardly, it can be engaged with the fixed fluted disc on the fifth gear 14, the power source 1 transmits the power to the vehicle axle half shaft via sequentially the input shaft 3, the first gear 4, the idle gear 5, the second gear 6, the intermediate shaft 8, the sixth gear 7, the fifth gear 14, the bidirectional clutch 16 and the output shaft 12, and the engagement transmission ratio in the automatic transmission 2 is i1×i2, which is the first working condition.

When the bidirectional clutch 16 moves leftwardly, it can be engaged with the fixed fluted disc on the fourth gear 11, the power source 1 transmits the power to the vehicle axle half shaft via sequentially the input shaft 3, the first gear 4, the idle gear 5, the second gear 6, the intermediate shaft 8, the third gear 10, the fourth gear 11, the bidirectional clutch 16 and the output shaft 12, and the engagement transmission ratio in the automatic transmission 2 is i1×i3, which is the second working condition.

When the bidirectional clutch 16 is in the center and is disengaged from both of the fifth gear 14 and the fourth gear 11, neutral position is implemented, and at this point no power is outputted to the vehicle axle half shaft.

The sequence of gear shifting of the driving unit on the right is the same as that of the driving unit on the left. The other contents of the sixth embodiment are the same as those of the first embodiment, and will not be described repeatedly here.
the dual-power-source dual driving assembly for a vehicle according to the present disclosure comprises two driving units that are symmetrically provided, which can provide a higher driving force for the vehicle, to significantly increase the vehicle speed.

The dual-power-source dual driving assembly for a vehicle according to the present disclosure is connected to the rear axle half shaft or the front axle half shaft of the vehicle, and the vehicle power assembly can realize transmission of two speed ratios, which results in flexible transmission modes, and satisfies the demands of the entire vehicle on travelling on different road conditions.

In the dual-power-source dual driving assembly for a vehicle according to the present disclosure, in one aspect the axial dimension of the driving assembly is shortened, which facilitates the placement in the entire vehicle, and in another aspect it uses a smaller quantity of the gears, which simplifies the transmission structure. The present disclosure, by using the integral structure of the electric motor and the transmission, solves the problems of conventional power assemblies that the axial dimensions are larger, which results in the difficulty in the placement in vehicles, and that the transmissions have a larger quantity of gears, which results in complicated transmission structures.

The above are merely particular embodiments of the present disclosure. By the teaching of the present disclosure, a person skilled in the art can make other modifications or variations on the basis of the above embodiments. A person skilled in the art should understand that the above particular descriptions are only for the purpose of better interpreting the present disclosure, and the protection scope of the present disclosure should be subject to the protection scope of the claims.

## Claims

1. A dual-power-source dual driving assembly for a vehicle, **characterized in that**: the dual-power-source dual driving assembly for a vehicle comprises two driving units that are symmetrically provided, the two driving units are connected to a same one set of vehicle axle half shaft, each of the two driving units is provided with a power source (1) and an automatic transmission (2), each of the automatic transmissions (2) is connected to one half shaft of the vehicle axle half shaft, and each of the automatic transmissions (2) has transmission of two speed ratios that are capable of mutually switching.

2. The dual-power-source dual driving assembly for a vehicle according to claim 1, **characterized in that**: each of the automatic transmissions (2) is provided with an input shaft (3), an intermediate shaft (8) and an output shaft (12) that are parallel, the input shaft (3) is connected to the power source (1), the output shaft (12) is connected to a left half shaft or right half shaft of the vehicle axle half shaft, the input shaft (3) is connected to the intermediate shaft (8) via a first gear train, a second gear train and a third gear train that are capable of mutually switching and have different transmission ratios are provided between the intermediate shaft (8) and the output shaft (12), and the intermediate shaft (8) and/or the output shaft (12) are/is provided with a clutch for the switching between the second gear train and the third gear train.

3. The dual-power-source dual driving assembly for a vehicle according to claim 2, **characterized in that**: the first gear train comprises a first gear (4) provided on the input shaft (3) and a second gear (6) provided on the intermediate shaft (8), and the first gear (4) and the second gear (6) are engaged; or an idle gear (5) is provided between the first gear (4) and the second gear (6).

4. The dual-power-source dual driving assembly for a vehicle according to claim 2, **characterized in that**: the second gear train comprises a third gear (10) provided on the intermediate shaft (8) and a fourth gear (11) that is provided on the output shaft (12) and is engaged with the third gear (10), and the third gear (10) is idle-nested to the intermediate shaft (8), and is connected to the clutch, or the fourth gear (11) is idle-nested to the output shaft (12), and is connected to the clutch.

5. The dual-power-source dual driving assembly for a vehicle according to claim 2, **characterized in that**: the third gear train comprises a fifth gear (14) provided on the output shaft (12) and a sixth gear (7) that is provided on the intermediate shaft (8) and is engaged with the fifth gear (14), and the fifth gear (14) is idle-nested to the output shaft (12), and is connected to the clutch, or the sixth gear (7) is idle-nested to the intermediate shaft (8), and is connected to the clutch.

6. The dual-power-source dual driving assembly for a vehicle according to claim 2, **characterized in that**: the clutch comprises a first-gear clutch (13) and a second-gear clutch (9), the first-gear clutch (13) is provided on the output shaft (12) or the intermediate shaft (8), and is configured to be connected to the third gear train, and the second-gear clutch (9) is provided on the intermediate shaft (8) or the output shaft (12), and is configured to be connected to the second gear train.

7. The dual-power-source dual driving assembly for a vehicle according to claim 2, **characterized in that**: the clutch comprises a first-gear clutch (13) and a second-gear clutch (9) that are coaxially provided on the intermediate shaft (8) or the output shaft (12), the first-gear clutch (13) is configured to be connected to the third gear train, and the second-gear clutch (9) is configured to be connected to the second gear train.

8. The dual-power-source dual driving assembly for a vehicle according to claim 2, **characterized in that**: the clutch is a bidirectional clutch (16) that is nested to the intermediate shaft (8) or the output shaft (12), and the bidirectional clutch (16) slides in an axial direction to be connected to the third gear train or the second gear train.

9. The dual-power-source dual driving assembly for a vehicle according to claim 2, **characterized in that**: a transmission ratio of the first gear train is i1, a transmission ratio of the second gear train is i3, and a transmission ratio of the third gear train is i2.

10. The dual-power-source dual driving assembly for a vehicle according to claim 2, **characterized in that**: a rotor shaft of the power source (1) and the input shaft (3) are of an integral structure.
